# EUROPÄISCHE PATENTANMELDUNG

(11) **EP 1 582 283 A1**
(43) Veröffentlichungstag der Anmeldung: **05.10.2005**
(21) Anmeldenummer: 05004708.3
(22) Anmeldetag: 03.03.2005
(51) Int. Cl.: B23K 11/11, B23K 11/16, B23K 11/34, C25D 13/22

(54) **Verfahren zum Punktschweissen von zwei Blechteilen aus höherfestem Stahl mit zwischen diesen Blechteilen liegenden Plättchen**

(30) Priorität: 03.04.2004 DE 102004016512
(71) Anmelder: Bayerische Motoren Werke Aktiengesellschaft, 80809 München (DE)
(72) Erfinder: Kirschner, Robert, 82140 Olching (DE); Staeves, Johannes, 80995 München (DE)

(57) **Zusammenfassung**

Die Erfindung betrifft ein Verfahren zum Punktschweißen von zwei Blechteilen (1,2) aus höherfestem Stahl, die anschließend mittels eines Elektrophoresebades grundiert bzw. lackiert werden. An den vorgesehenen Schweißpunkten werden Plättchen (3) aus einem gut schweißbaren Metall zwischen den beiden Blechteilen (1,2) angeordnet.

## Beschreibung

Die Erfindung betrifft ein Verfahren zum Punktschweißen von zwei Blechteilen aus höherfestem Stahl, die anschließend mittels eines Elektrophoresebades grundiert bzw. lackiert werden.

In der Automobilindustrie, insbesondere im Karosseriebau, werden Blechteile häufig durch Punktschweißen miteinander verbunden. Im Hinblick auf eine in einem späteren Fertigungsstadium erfolgende kathodische Tauchlackierung ist es erwünscht, daß zwischen den beiden flächig miteinander verbundenen Blechteilen ein das Eindringen des Lackes erleichternder Zwischenraum verbleibt. Zu diesem Zweck ist es üblich, eines der beiden Blechteile mit als Abstandhalter dienenden, Sicken zu versehen. Es ergibt sich daher eine reduzierte Berührungsfläche. Im Bereich aller oder einiger dieser Sicken werden die beiden Blechteile durch Punktschweißen miteinander verbunden. Wenn die Blechteile aus höherfestem Stahl bestehen, bereitet das Verschweißen jedoch Schwierigkeiten. Dies beruht unter anderem auf dem erhöhten Kohlenstoffgehalt höherfester Stähle. Im Karosseriebau ist die Werkstoffauswahl demzufolge eingeschränkt, da manche höherfeste Stähle nicht prozeßsicher miteinander punktgeschweißt werden können. Beispielsweise lassen sich zwei aus TRIPP-Stahl hergestellte Bauteile nicht durch Punktschweißen mit wiederholbarer Qualität verbinden.

Der Erfindung liegt die Aufgabe zugrunde, das gattungsgemäße Verfahren dahingehend weiterzubilden, daß Bauteile aus höherfesten Stählen prozeßsicher miteinander punktgeschweißt werden können und zugleich ihre nachfolgende Lackierung oder Grundierung mit Hilfe eines Elektrophoresebades verbessert wird.

Erfindungsgemäß wird diese Aufgabe dadurch gelöst, daß zwischen den beiden Blechteilen an den vorgesehenen Schweißpunkten Plättchen aus einem gut schweißbaren Metall angeordnet werden.

Es hat sich gezeigt, daß durch diese Maßnahme auch mit Blechteilen aus höherfesten Stählen eine Schweißverbindung mit wiederholbarer Qualität möglich ist. Beim Schweißen werden die beiden Bauteile und das zwischengefügte Plättchen zu einer "Dreiblechverbindung" verschweißt. Die zwischen den beiden Blechteilen angeordneten Plättchen dienen zugleich als Abstandselemente, wodurch ein Zwischenraum gebildet wird, der bei der anschließenden kathodischen Tauchlackierung der beiden Blechteile das Eindringen des Lackes erleichtert. Dadurch ist gewährleistet, daß die gesamte Oberfläche der miteinander verbundenen Blechteile mit Lack überzogen wird, was einen optimalen Korrosionsschutz gewährleistet.

Die Erfindung wird nachfolgend anhand eines Ausführungsbeispiels näher erläutert.

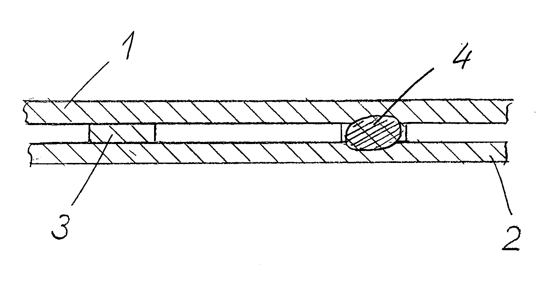

Die einzige Figur der Zeichnung zeigt einen vergrößerten Querschnitt zweier durch Punktschweißen miteinander verbundener Blechteile.

In der Zeichnung sind zwei flächig aneinanderliegende Blechteile 1, 2 gezeigt. Bei diesen Blechteilen kann es sich um tiefgezogene Formteile handeln, die einen ebenen Verbindungsflansch aufweisen. Im Bereich dieses Verbindungsflansches werden die beiden Blechteile 1 und 2 durch Punktschweißen miteinander verbunden. Zu diesem Zweck werden an den vorgesehenen Schweißpunkten zwischen den beiden Blechen 1 und 2 dünne Plättchen 3 angeordnet. Während die Blechteile 1 und 2 aus höherfesten Stählen, wie z. B. TRIPP-Stahl bestehen können, sollten die Plättchen 3 aus einem gut schweißbaren Metall, wie z. B. kohlenstoffarmes Eisen bestehen.

Zum Verschweißen der beiden Blechteile 1 und 2 werden in bekannter Weise an den vorgesehenen Schweißpunkten Elektroden angebracht. Beim Schweißen werden die beiden Blechteile 1 und 2 und das Plättchen 3 durch die Schweißlinse 4 zu einer "Dreiblechverbindung" verschweißt, wie dies in der rechten Hälfte der Zeichnung dargestellt ist.

Durch das zwischen den beiden Blechteilen 1 und 2 angeordnete und mit diesen verschweißte Plättchen 3 wird ein Zwischenraum geschaffen, der bei der nachfolgenden kathodischen Tauchlackierung der miteinander verbundenen Blechteile das Eindringen des Lackes erleichtert. Dadurch ist gewährleistet, daß die gesamte Oberfläche der beiden Blechteile 1, 2 mit Lack beschichtet und somit ein optimaler Korrosionsschutz erreicht wird.

## Patentansprüche

1. Verfahren zum Punktschweißen von zwei Blechteilen aus höherfestem Stahl, die anschließend mittels eines Elektrophoresebades grundiert bzw. lackiert werden, **dadurch gekennzeichnet, daß** zwischen den beiden Blechteilen an den vorgesehenen Schweißpunkten Plättchen aus einem gut schweißbaren Metall angeordnet werden.

2. Verfahren nach Anspruch 1, **dadurch gekennzeichnet, daß** als Material für die Plättchen kohlenstoffarmes Eisen verwendet wird.
